# FASCICULE DE BREVET EUROPEEN

(11) **EP 1 654 050 B1**
(45) Date de publication et mention de la délivrance du brevet: **14.04.2010**
(21) Numéro de dépôt: 04767856.0
(22) Date de dépôt: 28.06.2004
(51) Int. Cl.: B01D 53/047, C01B 3/56

(54) **PROCEDE DE PRODUCTION D'HYDROGENE PAR ADSORPTION ET INSTALLATION POUR LA MISE EN OEUVRE DE CE PROCEDE**
ADSORPTIONSVERFAHREN ZUR ERZEUGUNG VON WASSERSTOFF UND VORRICHTUNG ZUR DURCHFÜHRUNG DES VERFAHRENS
ADSORPTION METHOD FOR PRODUCING HYDROGEN AND DEVICE FOR CARRYING OUT SAID METHOD

(30) Priorité: 24.07.2003 FR 0350368
(43) Date de publication de la demande: 10.05.2006
(73) Titulaire: L'AIR LIQUIDE, Société Anonyme pour l'Etude et l'Exploitation des Procédés Georges Claude, 75007 Paris (FR)
(72) Inventeur: MONEREAU, Christian, F-75011 Paris (FR); FUENTES, François, F-78110 Le Vesinet (FR); DE SOUZA, Guillaume, F-92130 Issy Les Moulineaux (FR)
(74) Mandataire: Ducreux, Marie
(86) Numéro de dépôt international: PCT/FR2004/050294
(87) Numéro de publication internationale: WO 2005/009591

(56) Documents cités:
- EP-A- 0 579 290
- WO-A-03/068365
- US-A- 4 836 833
- US-A- 5 435 836

## Description

La présente invention concerne les procédés de production/épuration d'hydrogène par adsorption à variation de pression dans une unité PSA d'un gaz de charge à une première pression contenant de l'hydrogène avec envoi de résiduaire comprimé dans un réseau de distribution du mélange gazeux combustible à une deuxième pression et contenant également de l'hydrogène et destiné à alimenter divers postes utilisateurs sur le site ou à proximité.

Dans les installations classiques de production d'hydrogène à partir d'un gaz de charge, l'hydrogène est produit, aux pertes de charge près, à la pression haute du gaz de charge, le résiduaire du PSA étant quant à lui généralement évacué en basse pression dans un réseau de distribution de mélange gazeux combustible (dit « réseau fuel gaz ») présent sur les grands sites industriels et véhiculant des mélanges d'hydrocarbure et d'hydrogène moyenne pression issus de purges diverses et destinés à être brûlés, notamment dans une chaudière pour produire de la vapeur.

Ces unités PSA présentent le défaut d'être limitées en rendement d'extraction, ce qui fait qu'une partie non négligeable de l'hydrogène du gaz de charge est perdu dans le résiduaire et dans le réseau de mélange gazeux combustible.

Le document WO-03/068365 divulgue un procédé dans lequel une partie du flux de mélange gazeux combustible circulant dans une ligne de distribution est dérivée, comprimée et traitée comme un gaz de cycle dans une unité de production d'un gaz actif à partir d'un mélange gazeux de synthèse. Le flux dérivé où la part de composant actif a été en partie éliminé est réinjecté dans la ligne de distribution.

Pour passer d'un rendement légèrement supérieur à 72% à un rendement légèrement supérieur à 80%, il a été proposé de multiplier les équilibrages entre les bouteilles de l'unité PSA, ce qui nécessite néanmoins un investissement important (plus grand nombre d'adsorbeurs, généralement unitairement plus gros).

Une deuxième approche pour améliorer le rendement consiste à diminuer la pression de régénération en extrayant le résiduaire sous une pression réduite légèrement supérieure à la pression atmosphérique, le rendement pouvant alors atteindre, au prix de l'adjonction d'un compresseur, des valeurs de l'ordre de 90%.

Par ailleurs, en recyclant, avec compression, une partie du résiduaire PSA dans le gaz de charge, on peut atteindre des rendements de l'ordre de 95%, mais au prix d'un compresseur supplémentaire.

La présente invention a pour objet de proposer un procédé de production d'hydrogène amélioré permettant, sans surcoûts significatifs, d'obtenir des rendements supérieurs à 95%, atteignant, voire dépassant les 100%

Pour ce faire, le procédé selon l'invention comprend en outre l'étape de prélever dans le réseau de distribution une fraction de mélange gazeux combustible contenant au moins 30% d'hydrogène, de la comprimer sensiblement à la pression du gaz de charge et de l'injecter comme gaz de charge additionnel dans l'unité PSA, par exemple en mélange dans le gaz de charge.

En effet, alors que, même avec un gaz de charge riche en hydrogène, par exemple avec une teneur en hydrogène supérieure à 70%, la composition du résiduaire devient rapidement pauvre lorsqu'on augmente le rendement de l'unité PSA, tombant rapidement au-dessous de 30% dès que les rendements d'extraction deviennent supérieurs à 85%, les inventeurs ont mis en évidence que, dans la majorité des cas, la teneur en hydrogène dans le réseau de distribution de mélange gazeux combustible était supérieure à ces valeurs, généralement de l'ordre de 35 à 50%, et qu'il était donc judicieux de constituer une alimentation secondaire de l'unité PSA avec ce fluide riche en hydrogène plutôt qu'avec du résiduaire recyclé.

Avec le procédé selon l'invention, pour une même production on aura besoin d'introduire moins de gaz de charge, diminuant ainsi la compression nécessaire et généralement la taille de l'unité PSA pour un gain en énergie et en investissement. Il devient également possible, pour une même quantité d'impuretés introduites dans l'unité PSA et/ou pour une même quantité de gaz comprimé, de traiter sensiblement plus d'hydrogène et d'augmenter la production pour atteindre, comme susmentionné, des rendements supérieurs à 98%.

L'utilisation de lits multiples, mettant en oeuvre des adsorbants différents à fonctionnalités spécifiques, tels que l'alumine activée, les gels de silices, les charbons actifs et les zéolithes adéquates, permet de gérer avec précision l'introduction dans les PSA de constituants non désirés normalement non présents dans le gaz de charge principal.

La présente invention a également pour objet une installation pour la mise en oeuvre de ce procédé, comprenant :
- au moins une conduite de fourniture de gaz de charge;
- au moins une ligne d'un réseau de distribution de mélange gazeux combustible ;
- au moins une unité PSA de séparation de gaz par adsorption ayant une entrée reliée à la conduite de gaz de charge, une sortie de gaz de production et au moins une sortie de gaz résiduaire ;
- un premier compresseur reliant la sortie de gaz résiduaire à la ligne de mélange gazeux combustible ; et
- un deuxième compresseur reliant la ligne de mélange gazeux compressible à l'entrée de l'unité PSA, typiquement à la conduite de gaz de charge.

Selon une caractéristique plus particulière de l'invention, les premier et deuxième compresseurs utilisent des sous-ensembles communs et constituent par exemple des étages différents de compression sur une ligne d'arbres commune.

Avec un tel agencement, l'adjonction de l'alimentation secondaire de l'unité PSA obtenue en comprimant une fraction prélevée sur le réseau de distribution de mélange gazeux combustible permet, à bon compte par rapport à une solution classique, d'augmenter le rendement d'extraction en hydrogène et ce, de façon plus efficace que par la mise en oeuvre d'un recyclage d'une partie du résiduaire de l'unité PSA.

La présente invention sera maintenant décrite en relation avec un mode de réalisation donné à titre illustratif mais nullement limitatif, faite en relation avec le dessin annexé, sur lequel :

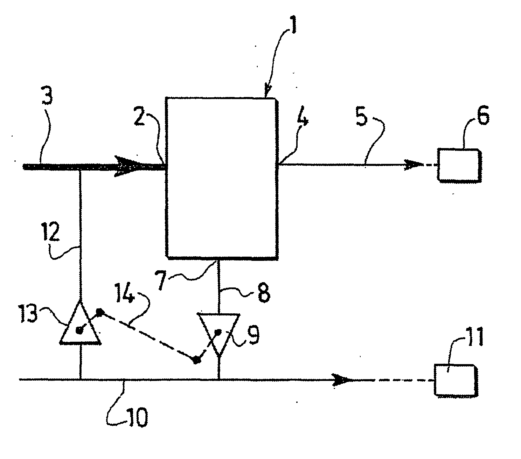

- la figure 1 est une vue schématique d'une installation pour la mise en oeuvre du procédé selon l'invention.

Sur la figure unique, on reconnaît une unité PSA de production d'hydrogène par adsorption à variation de pression 1 comprenant au moins quatre adsorbeurs contenant chacun au moins un adsorbant capable de séparer l'hydrogène d'un mélange gazeux contenant de l'hydrogène, typiquement un charbon actif et/ou une zéolite.

L'unité PSA 1 comporte une entrée 2 recevant un gaz de charge à haute pression, typiquement entre 15 et 45 bars, dans une conduite 3 provenant par exemple d'une unité de réformage catalytique et contenant au moins 60%, avantageusement au moins 70% d'hydrogène. L'unité PSA 1 comporte une sortie 4 pour l'alimentation d'une conduite 5 de fourniture, sensiblement à la même pression que le gaz de charge d'hydrogène à pureté élevée vers des postes utilisateurs 6 du site.

L'unité PSA 1 comporte au moins une sortie de gaz résiduaire 7, appauvri en hydrogène, acheminé, via une conduite 8 incorporant un compresseur d'extraction 9, vers une ligne 10 convoyant sur le site un mélange gazeux combustible destiné à alimenter d'autres postes utilisateurs, typiquement des brûleurs 11 pour la chauffe d'éléments actifs ou passifs du site industriel, et contenant au moins 30%, avantageusement entre 35 et 50% d'hydrogène.

Avec cet agencement, le gaz résiduaire est extrait, à la sortie 7, à une pression basse, de l'ordre de 1,1 à 2 bars, et est comprimé, par le compresseur 9 à la pression régnant dans la ligne 10, typiquement comprise entre 3 et 8 bars.

Selon un aspect de l'invention, une conduite 12 incorporant un compresseur 13 relie un point de la ligne 10 en amont de la zone de raccordement de la ligne 10 avec la conduite 8 à la conduite de fourniture de gaz de charge 3, le compresseur 13 portant la fraction du flux de mélange gazeux combustible prélevé dans la ligne 10 à la pression haute de la conduite 3 pour réinjecter dans le gaz de charge une quantité additionnelle d'hydrogène disponible dans le mélange gazeux combustible.

Selon un aspect de l'invention, les compresseurs 9 et 13 sont agencés pour mettre en commun certains sous-ensembles, par exemple une centrale d'huile commune, un système de réfrigération commun, voire un système d'entraînement commun, comme figuré par la ligne 14 sur la figure.

Ainsi, de préférence, les deux compresseurs 9 et 13 sont regroupés dans une seule machine avec un ou plusieurs étages dédiés à chacun des compresseurs, lesdits étages pouvant être des pistons, des roues, des vis.

En intégrant ainsi des fonctionnalités des deux compresseurs, on peut aboutir à des économies d'échelle de l'ordre de 30 à 40% sur l'investissement.

Quoique l'invention ait été décrite en relation avec des modes de réalisation particuliers, elle ne s'en trouve pas limitée, mais est susceptible de modifications et de variantes qui apparaîtront à l'homme du métier dans le cadre des revendications ci-après.

Ainsi, l'injection dans l'unité PSA 1 d'une partie du flux de mélange gazeux combustible, via la conduite 12, peut être effectuée séparément de l'admission de gaz de charge principal 3 dans l'unité PSA 1 si le cycle retenu pour cette dernière le permet (en particulier dans le cas de plusieurs bouteilles simultanément en phase de production).

Par ailleurs, également selon les cycles de l'unité PSA 1, on peut injecter une partie du résiduaire disponible en sortie 7 de l'unité PSA 1 directement dans le réseau 10, sans compression, par exemple au début de la dépressurisation d'un adsorbeur, le résiduaire étant ensuite comprimé par le compresseur lorsque la pression dans la bouteille d'adsorbeur diminue.

Enfin, le prélèvement d'un flux de mélange gazeux de combustion peut se faire sur un réseau fonctionnant en parallèle au réseau 10 recevant le résiduaire de l'unité PSA, pourvu que ce réseau parallèle véhicule un mélange gazeux contenant au moins 30% d'hydrogène.

## Revendications

1. Procédé de production d'hydrogène par adsorption à variation de pression dans une unité PSA d'un gaz de charge à une première pression (P₁) contenant de l'hydrogène avec envoi de résiduaire comprimé dans un réseau de distribution de mélange gazeux combustible à une deuxième pression (P₂), inférieure à la première pression (P₁), et contenant au moins 30% d'hydrogène, comprenant l'étape de prélever une fraction de mélange gazeux combustible circulant dans le réseau, de la comprimer sensiblement à la première pression (P₁) et de l'injecter comme gaz de charge additionnel dans l'unité PSA.

2. Procédé selon la revendication 1, **caractérisé en ce qu'**il comprend l'étape d'injecter la fraction de mélange gazeux combustible dans le gaz de charge.

3. Procédé selon les revendications 1 et 2, **caractérisé en ce que** la première pression (P₁) est comprise entre 15 et 45 bars et la deuxième pression (P₂) est comprise entre 3 et 8 bars.

4. Procédé selon l'une des revendications précédentes, **caractérisé en ce que** le résiduaire est extrait de l'unité d'adsorption à variation de pression à une troisième pression (P₃) comprise entre 1,1 et 2 bars environ.

5. Procédé selon l'une des revendications précédentes, **caractérisé en ce que** le mélange gazeux combustible contient entre 35 et 50% d'hydrogène.

6. Installation pour la mise en oeuvre du procédé selon l'une des revendications précédentes, comprenant:
- au moins une conduite de fourniture de gaz de charge (3) ;
- au moins une ligne (10) d'un réseau de distribution de mélange gazeux combustible;
- au moins une unité PSA (1) de séparation de gaz par adsorption ayant une entrée (2) reliée à la conduite de gaz de charge (3), une sortie de gaz de production (4) et au moins une sortie (7) de gaz résiduaire ;
- un premier compresseur (9) reliant la sortie de gaz résiduaire (7) à la ligne (10) ; et
- un deuxième compresseur (13) reliant la ligne (10) d'un réseau de distribution de mélange gazeux combustible à l'entrée (2) de l'unité PSA.

7. Installation selon la revendication 6, **caractérisée en ce que** le deuxième compresseur (13) est disposé dans une conduite (12) reliant la ligne (10) à la conduite de gaz de charge (3).

8. Installation selon la revendication 6 ou 7, **caractérisée en ce que** le deuxième compresseur (13) est relié à la ligne (10) d'un réseau de distribution de mélange gazeux combustible en amont de la connexion de cette dernière au premier compresseur (9).

9. Installation selon l'une des revendications 6 à 8, **caractérisée en ce que** les premier (9) et deuxième (13) compresseurs utilisent des sous-ensembles communs.

10. Installation selon la revendication 9, **caractérisée en ce que** les premier (9) et deuxième (13) compresseurs comportent une ligne d'arbre commune (14).

## Claims

1. Method for producing hydrogen by Pressure Swing Adsorption in a PSA unit of a feedstock gas at a first pressure (P₁) containing hydrogen, with compressed waste being sent to a fuel gas mixture distribution network at a second pressure (P₂), lower than the first pressure (P₁), and containing at least 30% hydrogen, involving the step of tapping off a fraction of the fuel gas mixture flowing through the network, of compressing it more or less to the first pressure (P₁) and of injecting it by way of additional feedstock gas into the PSA unit.

2. Method according to Claim 1, **characterized in that** it involves the step of injecting the fraction of fuel gas mixture into the feedstock gas.

3. Method according to Claims 1 and 2, **characterized in that** the first pressure (P₁) ranges between 15 and 45 bar and the second pressure (P₂) ranges between 3 and 8 bar.

4. Method according to one of the preceding claims, **characterized in that** the waste is extracted from the pressure swing adsorption unit at a third pressure (P₃) ranging between about 1.1 and 2 bar.

5. Method according to one of the preceding claims, **characterized in that** the fuel gas mixture contains between 35 and 50% hydrogen.

6. Installation for implementing the method as claimed in one of the preceding claims, comprising:
- at least one feedstock gas supply pipe (3);
- at least one line (10) of a fuel gas mixture distribution network;
- at least one PSA unit (1) for separating gases by adsorption having one inlet (2) connected to the feedstock gas pipe (3), a production gas outlet (4) and at least one waste gas outlet (7);
- a first compressor (9) connecting the waste gas outlet (7) to the line (10); and
- a second compressor (13) connecting the line (10) of a fuel gas mixture distribution network to the inlet (2) of the PSA unit.

7. Installation according to Claim 6, **characterized in that** the second compressor (13) is placed in a pipe (12) connecting the line (10) to the feedstock gas pipe (3).

8. Installation according to Claim 6 or 7, **characterized in that** the second compressor (13) is connected to the line (10) of a fuel gas mixture distribution network upstream of the latter's connection to the first compressor (9).

9. Installation according to one of Claims 6 to 8, **characterized in that** the first (9) and second (13) compressors use common subassemblies.

10. Installation according to Claim 9, **characterized in that** the first (9) and second (13) compressors have a common driveline (14).

## Patentansprüche

1. Verfahren zur Herstellung von Wasserstoff durch Druckwechseladsorption eines Einsatzgases, das einen ersten Druck (P₁) aufweist und Wasserstoff enthält, mit Zuführung von verdichtetem Rest zu einem Verteilungsnetzwerk für ein Brenngasgemisch, das einen zweiten Druck (P₂), der unter dem ersten Druck (P₁) liegt, aufweist und mindestens 30% Wasserstoff enthält, in einer PSA-Einheit, bei dem man eine Fraktion des durch das Netzwerk strömenden Brenngasgemischs abzieht, weitgehend auf den ersten Druck (P₁) verdichtet und als zusätzliches Einsatzgas in die PSA-Einheit einleitet.

2. Verfahren nach Anspruch 1, **dadurch gekennzeichnet, daß** man die Fraktion des Brenngasgemischs in das Einsatzgas einleitet.

3. Verfahren nach den Ansprüchen 1 und 2, **dadurch gekennzeichnet, daß** der erste Druck (P₁) zwischen 15 und 45 bar liegt und der zweite Druck (P₂) zwischen 3 und 8 bar liegt.

4. Verfahren nach einem der vorhergehenden Ansprüche, **dadurch gekennzeichnet, daß** der Rest bei einem dritten Druck (P₃) etwa zwischen 1,1 und 2 bar aus der Druckwechseladsorptionseinheit ausgeschleust wird.

5. Verfahren nach einem der vorhergehenden Ansprüche, **dadurch gekennzeichnet, daß** das Brenngasgemisch zwischen 35 und 50% Wasserstoff enthält.

6. Vorrichtung zur Durchführung des Verfahrens nach einem der vorhergehenden Ansprüche mit:
- mindestens einer Einsatzgaszufuhrleitung (3);
- mindestens einer Leitung (10) eines Brenngasgemisch-Verteilungsnetzwerks;
- mindestens einer PSA-Einheit (1) zur Trennung von Gasen durch Adsorption mit einem Eingang (2), der mit der Einsatzgasleitung (3) verbunden ist, einem Produktionsgasausgang (4) und mindestens einem Restgasausgang (7);
- einem ersten Verdichter (9), der den Restgasausgang (7) mit der Leitung (10) verbindet; und
- einem zweiten Verdichter (13), der die Leitung (10) eines Brenngasgemisch-Verteilungsnetzwerks mit dem Eingang (2) der PSA-Einheit verbindet.

7. Vorrichtung nach Anspruch 6, **dadurch gekennzeichnet, daß** der zweite Verdichter (13) in einer Leitung (12), die die Leitung (10) mit der Einsatzgasleitung (3) verbindet, angeordnet ist.

8. Vorrichtung nach Anspruch 6 oder 7, **dadurch gekennzeichnet, daß** der zweite Verdichter (13) stromaufwärts der Verbindung der Leitung (10) eines Brenngasgemisch-Verteilungsnetzwerks mit dem ersten Verdichter (9) mit der Leitung (10) verbunden ist.

9. Vorrichtung nach einem der Ansprüche 6 bis 8, **dadurch gekennzeichnet, daß** der erste Verdichter (9) und der zweite Verdichter (13) gemeinsame Teilsysteme verwenden.

10. Vorrichtung nach Anspruch 9, **dadurch gekennzeichnet, daß** der erste Verdichter (9) und der zweite Verdichter (13) einen gemeinsamen Wellenstrang (14) aufweisen.
